# EUROPÄISCHE PATENTSCHRIFT

(11) **EP 3 282 816 B1**
(45) Veröffentlichungstag und Bekanntmachung des Hinweises auf die Patenterteilung: **13.04.2022**
(21) Anmeldenummer: 17179546.1
(22) Anmeldetag: 04.07.2017
(51) Int. Cl.: H05B 6/06, A47J 36/32

(54) **INDUKTIVES KOCHSYSTEM**
INDUCTIVE COOKING SYSTEM
SYSTÈME DE CUISSON À INDUCTION

(30) Priorität: 10.08.2016 DE 102016114838
(43) Veröffentlichungstag der Anmeldung: 14.02.2018
(73) Patentinhaber: Miele & Cie. KG, 33332 Gütersloh (DE)
(72) Erfinder: EBKE, Daniel, 33613 Bielefeld (DE); ENNEN, Volker, 32130 Enger (DE); METZ, Thomas, 32257 Bünde (DE)

(56) Entgegenhaltungen:
- EP-A1- 2 693 127
- EP-A2- 1 708 545
- EP-B1- 1 708 545
- WO-A1-2012/063159
- DE-B4-102011 079 689
- US-A1- 2016 066 744

## Beschreibung

Die Erfindung betrifft ein induktives Kochsystem gemäß dem Oberbegriff des Patentanspruchs 1, ein Induktionskochfeld zur Verwendung in einem derartigen induktiven Kochsystem gemäß dem Patentanspruch 10 sowie zwei Verfahren zum Betrieb eines derartigen induktiven Kochsystems gemäß der Patentansprüche Z 11 und 12.

Im Bereich der heimischen Kochprozesse geht der Trend immer weiter zur einfacheren, komfortableren und sichereren Durchführung der Kochprozesse hin. Insbesondere sollen Automatikprogramme zur Verfügung gestellt werden, welche dem Benutzer einen Teil der Durchführung des Kochprozesses abnehmen sollen. Ferner sollen dem Benutzer zusätzliche Informationen zur Verfügung gestellt und bzw. oder zusätzliche Informationen automatisch zur Steuerung und bzw. oder Regelung des Kochprozesses verwendet werden können. Beispielsweise soll aus Sicherheitsgründen wie z.B. bei einer Überhitzung des Kochgeschirrs eine Abschaltung des Kochprozesses automatisch vorgenommen werden können.

Hierzu kann es erforderlich oder zumindest wünschenswert sein, dass gewisse Informationen über den Kochprozess vom Kochgeschirr an das Kochfeld übermittelt werden. Derartige Informationen können eine Temperatur des Kochgutes bzw. des Kochgeschirrs und bzw. oder ein Gewicht des Kochgutes bzw. des Kochgeschirrs sein. Diese Informationen können dann dem Benutzer z.B. durch optische Anzeigen zur Verfügung gestellt und bzw. oder von der Elektronik des Kochfeldes zur Steuerung und bzw. oder Regelung des Kochprozesses verwendet werden.

Die Druckschrift EP2693127 A1 offenbart eine Kochfeldvorrichtung gemäß dem Oberbegriff des Anspruches 1.

Aus der DE 197 29 662 A1 ist ein Informations-Übertragungssystem für automatisch zu betreibende Kochgefäße auf einer Beheizungseinrichtung einer Kochstelle bekannt, welches Informationen von Sensoren, die sich im Inneren des Kochgefäßes befinden, an Empfangsmittel der Beheizungseinrichtung überträgt. Dazu befindet sich an dem Kochgefäß oder dessen Deckel eine Sendespule zum Aussenden der Signale.

Die Druckschriften EP 1 708 545 A2, DE 10 2011 088 918 A1 und DE 10 2011 079 689 B4 offenbaren Systeme zur Übertragung von Daten bei dem die Spule der Heizeinrichtung als Empfangsmittel verwendet wird und in dem Kochgefäß eine, vorzugsweise als Spule ausgeführte, Antenne als Sendemittel vorgesehen ist. Zum Übertragen der Daten muss bei dieser Lösung jedoch der Leistungsbetrieb unterbrochen werden.

Aus der DE 10 2009 003 105 A1 ist ein Transponder, insbesondere ein RFID-Tag, für ein Gargeschirr sowie ein Gargeschirr mit einem derartigen Transponder bekannt, wobei der Transponder hochtemperaturfest ist und mindestens einen Temperatursensor aufweist. Aufgrund seiner hochtemperaturfesten Ausgestaltung kann der Transponder an einer Stelle auf dem Gargeschirr angebracht werden, welche sich nahe an dem zu erwärmenden Gargut befindet.

Nachteilig ist in beiden Fällen, dass eine Kommunikation zwischen Kochgeschirr und Kochfeld bzw. Kochstelle oder dergleichen über eine Funkübertragung z.B. mittels Transpondertechnik stattfindet. Dies kann eine Fernwirkung darstellen, d.h. eine Steuerung und bzw. oder eine Regelung eines Gerätes durch einen Befehl, der außerhalb der Sichtweite eines Gerätes vorgenommen werden kann. Somit kann zwischen den Teilnehmern eine Kommunikation und damit verbunden eine gegenseitige oder zumindest einseitige Beeinflussung stattfinden, auch wenn sich diese nicht in ihrem bestimmungsgemäßen Einsatz befinden.

Mit anderen Worten könnte z.B. eine Übertragung eines Sensorwertes wie z.B. einer Temperatur und bzw. oder eines Gewichts seitens des Kochgeschirrs stattfinden, obwohl sich das Kochgeschirr gar nicht auf dem Kochfeld bzw. auf der entsprechenden Kochstelle befindet. Dies kann zu falschen Angaben für den Benutzer bzw. zu einer fehlerhaften Steuerung und bzw. oder Regelung seitens des Kochfeldes führen, weil für die Kochstelle von Informationen ausgegangen wird, die die Kochstelle gar nicht betreffen. Da dies die Sicherheit des Benutzers gefährden kann, sind derartige Fernwirkungen im Haushalt gemäß der Norm DIN EN 60335-01 (VDE 0700-1) zu unterbinden. Die zuvor beschriebenen Vorrichtungen könnten somit nicht normgerecht sein, was ihren Einsatz verhindern kann.

Es ist allgemein von Kochgeschirren der Firmen Gorenje und BSH bekannt, ein Sensormodul zur Erfassung einer Temperatur eines Kochgeschirrs bzw. dessen Gargutes vorzusehen, welche seitens der Fa. Gorenje am Deckel und seitens der Fa. BSH am Kochtopf befestigt werden kann. In beiden Fällen findet eine Kommunikation über Bluetooth statt. Um hierbei eine Fernwirkung zu vermeiden, wird bei der Einstellung der Garparameter ein Pairing zwischen Kochgeschirr und Kochstelle, d.h. eine erstmalige Verbindungsaufnahme zwischen zwei Bluetooth-Geräten, vorgenommen. Auf einem Flächenkochfeld kann ein Pairing zwischen einer bestimmten Spule und dem Kochgeschirr erfolgen.

Nachteilig bleibt jedoch, dass die Position des Kochgeschirrs relativ zur zugeordneten Kochstelle bzw. zur zugeordneten Spule nach dem Pairing verändert werden kann, so dass doch eine Fernwirkung möglich ist, welche zu einem unsicheren Betrieb führen kann. Ferner können zwar beim Pairing ein Kochgeschirr und eine Kochstelle bzw. eine Spule durch den Benutzer miteinander gekoppelt werden, das Kochgeschirr muss sich jedoch in diesem Moment nicht zwangsläufig über dieser Kochstelle bzw. Spule befinden, so dass Fehlbedienungen des Benutzers möglich sind. In beiden Fällen kann somit z.B. die Temperatur in einem anderen Kochgeschirr steigen, ohne das der Temperatursensor einen Temperaturanstieg erfassen kann, weil das durch Pairing verbundene Kochgeschirr und das entsprechende Kochfeld bzw. die entsprechende Spule nicht deckungsgleich angeordnet sind. Dies kann einen naheliegenden Fehlgebrauch durch den Benutzer ermöglichen, welcher zu einem unsicheren Betrieb führen kann.

Nachteilig ist weiterhin bei allen zuvor beschriebenen Vorrichtungen, dass die Sensorik bzw. der Sender im Kochgeschirr mit elektrischer Energie aus Batterien versorgt werden muss. Dies kann die Einsatzdauer dieser Funktion begrenzen. Der Austausch der Batterien bzw. das Wiederaufladen von Akkumulatoren kann einen zusätzlichen und störenden Aufwand für den Benutzer darstellen.

Aus der DE 197 54 851 A1 ist ein Induktions-Kochsystem bekannt, dessen Kochgeschirr durch einen temperaturabhängig bewegten Permanentmagneten temperaturgeregelt ist und sich in einem wärmeisolierten Übertopf befindet. Der Permanentmagnet wird durch ein Thermobimetall bewegt, welches in einem Luftspalt zwischen Kochgeschirrboden und Übertopfboden angeordnet ist. Die Regler-Konstruktionsanordnung ist so weit unter den Kochgeschirrboden geschoben, dass sie vollständig innerhalb des Übertopfmantels liegt. Das Bimetall ist nicht ferromagnetisch. Der unter der Kochstelle angeordnete Reedkontakt, auf den der Permanentmagnet einwirkt, befindet sich zur Abschirmung des Induktionsfeldes in einem oben offenen Rohr aus ferromagnetischem Material.

Bei diesem Kochsystem kann zwar auf eine Kommunikation mittels Funkübertragung verzichtet werden, sodass eine Fernwirkung vermieden werden kann. Auch ist keinerlei elektrischer Energiespeicher im Kochgeschirr erforderlich.

Nachteilig ist jedoch, dass hierzu ein hoher Aufwand erforderlich ist, indem ein sehr spezieller und aufwendiger Topf als Kochgeschirr verwendet werden und die Kochstelle entsprechend ausgebildet sein muss. Ferner muss der Topf passend über dem Reedkontakt der Kochstelle positioniert werden, damit das Kochsystem bestimmungsgemäß funktionieren kann. Dies erschwert die Anwendung einer derartigen Technik auf Flächenkochfeldern, weil diese hierfür flächendeckend mit Reedkontakten ausgestattet sein müssten, um diese Art der Kommunikation anwenden zu können. Dies würde zu hohen zusätzlichen Kosten führen.

Seitens der Fa. Miele ist eine Funktion "Miele Temp Control" bekannt. Hierbei wird die Temperatur im Kochgefäßboden mittels eines Infrarotsensors durch die Oberfläche des Kochfeldes hindurch berührungslos gemessen. Auch auf diese Weise kann eine Fernwirkung sowie der Einsatz von elektrischen Energiespeichern im Kochgeschirr vermieden werden, weil die Temperaturerfassung seitens des Kochfeldes und damit ohne aktive Mitwirkung des Kochgeschirrs erfolgt.

Nachteilig ist hierbei allerdings, dass lediglich die Temperatur des Kochgefäßbodens erfasst werden kann, von der dann auf die Temperatur der Flüssigkeit geschlossen werden muss. Die Temperatur des Kochgefäßbodens kann jedoch durch die Temperatur des Lebensmittels im Kochgefäß beeinflusst werden.

Nachteilig ist weiterhin, dass eine Erfassung einer Temperatur im Kochgefäßboden mittels eines Infrarotsensors bei einem Flächenkochfeld zu hohen zusätzlichen Kosten führen kann, da entsprechend viele Temperatursensoren vorzusehen sind. Ferner muss das zu überwachende Kochgefäß vom Benutzer genau über der Sensorposition platziert werden, was die Wahrscheinlichkeit einer Fehlbedienung erhöhen kann.

Aus der Druckschrift DE 10 2012 213 831 A1 ist eine Wiegeeinrichtung bekannt, welche zwischen Kochfeld und Kochgefäß angeordnet wird. Diese Wiegeeinrichtung hat Datenübertragungsmittel um eine erfasste Gewichtskraft an das Kochfeld zu übermitteln.

Seitens der Firma Panasonic wurde auf der IFA 2015 ein Kochfeld mit einer Wäagefunktion vorgestellt, bei der die Messung über Dehnungsmessstreifen erfolgt, die unter der Glasplatte des Kochfeldes angeordnet sind. Die Gewichtskräfte erzeugen Spannungen in der gesamten Glasfläche, die in die Glasscheibe eingeleitet werden. Die Höhe der Spannung ist abhängig von der Position, an der die Gewichtskraft eingebracht wird.

Nachteilig ist hierbei, dass von unten an die Kochfeldplatte gedrückte Heizelemente den Spannungsverlauf in der Kochfeldplatte beeinflussen können. Dies kann die Messung verfälschen. Nachteilig ist ferner auch hier, dass jede Kochstelle bzw. jede Spule eines Flächenkochfeldes mit dieser Sensorik ausgerüstet sein muss, um diese Funktion durchführen zu können. Dies kann den Einsatz dieser Technik bei Flächenkochfeldern entsprechend aufwendig und teuer werden lassen.

Der Erfindung stellt sich somit das Problem, ein induktives Kochsystem der eingangs beschriebenen Art bereitzustellen, so dass ein Kochgeschirr einem Heizelement eindeutig zugeordnet werden kann, ohne dass eine Fernwirkung auftreten kann. Insbesondere soll das Entfernen eines Kochgeschirrs von einem Heizelement einfacher, kostengünstiger und bzw. oder zuverlässiger als bisher bekannt erkannt werden können, ohne dass eine Fernwirkung auftreten kann. Insbesondere soll ein Kochgeschirr individuell erkannt werden können.

Erfindungsgemäß wird dieses Problem durch ein induktives Kochsystem mit den Merkmalen des Patentanspruchs 1, durch ein Induktionskochfeld mit den Merkmalen des Patentanspruchs 11, durch ein Kochgeschirr mit den Merkmalen des Patentanspruchs 12 sowie durch zwei Verfahren zum Betrieb eines induktiven Kochsystems mit den Merkmalen des Patentanspruchs 13 bzw. 14 gelöst. Vorteilhafte Ausgestaltungen und Weiterbildungen der Erfindung ergeben sich aus den nachfolgenden Unteransprüchen.

Somit betrifft die vorliegende Erfindung ein induktives Kochsystem mit einem Induktionskochfeld mit wenigstens einer ersten induktiven Kochstelle und wenigstens einem ersten Kochgeschirr, welches auf der ersten induktiven Kochstelle angeordnet ist.

Das erfindungsgemäße induktive Kochsystem ist dadurch gekennzeichnet, dass das Induktionskochfeld ausgebildet ist, die induktive Leistung der ersten induktiven Kochstelle in der Frequenz zu modulieren. Dies kann mittels des Heizelementes der ersten induktiven Kochstelle umgesetzt werden, welche üblicherweise eine Induktionsspule oder mehrere Induktionsspulen sein kann.

Ferner weist das erste Kochgeschirr einen Kraftsensor auf, der ausgebildet ist, eine Gewichtskraft des ersten Kochgeschirrs gegenüber der Oberfläche der ersten induktiven Kochstelle zu erfassen. Hierdurch kann das Gewicht bzw. die Gewichtskraft des ersten Kochgeschirrs bzw. dessen Veränderung erfasst werden, welche von oben auf die Oberfläche der ersten induktiven Kochstelle wirken kann. Hierdurch kann neben dem Gewicht des ersten Kochgeschirrs an sich auch das Gesamtgewicht aus Kochgeschirr und Gargut bzw. dessen Veränderung während eines Kochprozesses erfasst werden.

Weiterhin ist das Induktionskochfeld ausgebildet, ein Signal eines Kraftmesswertes von dem ersten Kochgeschirr zu empfangen. Dies geschieht über die Antenne des Induktionskochfeldes. Auf diese Weise kann das durch den Kraftsensor erfasste Gewicht bzw. eine Gewichtsänderung des ersten Kochgeschirrs dem Induktionskochfeld zur Verfügung gestellt werden, um diese Informationen dem Benutzer zur Verfügung zu stellen und bzw. oder diese Informationen zur Steuerung und bzw. Regelung des Kochprozesses durch das Induktionskochfeld zu verwenden.

Die Antenne ist getrennt von der Spule ausgeführt. Insbesondere hat das Induktionskochfeld eine einzige Antenne zum Empfangen von Signalen, unabhängig von der Anzahl der Kochstellen oder Spulen.

Das Induktionskochfeld kann das Signal des Kraftmesswertes kontinuierlich oder periodisch empfangen. Als periodisches Empfangen ist zu verstehen, dass zwischen zwei übertragenen Signalen eine zeitliche Übertragungspause liegt. Das bedeutet, dass in einem Zeitintervall eine beschränkte Anzahl an Kraftmesswerten übertragen werden. Es hat sich als vorteilhaft erwiesen, dass in einem Zeitintervall von einer Sekunde zwischen 10 und 100 Kraftmesswerte übermittelt werden. Hierdurch ist es möglich schnell auf Änderungen des Kraftmesswertes zu reagieren und/oder die Vielzahl der übertragenen Kraftmesswerte zu deren Validierung zu nutzen. Dabei liegt der vorliegenden Erfindung die Erkenntnis zugrunde, dass sich über die Modulation der Frequenz der induktiven Leistung der ersten induktiven Kochstelle eine weitere Information aus dem erfassten Signal eines Kraftmesswertes von dem ersten Kochgeschirr gewinnen lässt. Durch die induktive Leistung, welche die erste induktive Kochstelle in das erste Kochgeschirr als thermische Wirkung einbringt, wird nämlich gleichzeitig die Gewichtskraft des ersten Kochgeschirrs verändert. Die Gewichtskraft des ersten Kochgeschirrs verändert sich in einem Bereich der induktiven Leistung zwischen 0 W und 3.300 W um ca. 1 N bzw. um ca. 100 g.

Wird somit die induktive Leistung z.B. mit einer Frequenz von ca. 2 Hz moduliert, so kann hierdurch eine Schwankung der Gewichtskraft des ersten Kochgeschirrs mit dieser Frequenz bewirkt werden. Diese Schwankung der Gewichtskraft des ersten Kochgeschirrs spiegelt sich in dem Kraftmesswert wieder, welcher von dem Kraftsensor des ersten Kochgeschirrs erfasst wird. Somit weist auch das Signal eines Kraftmesswertes, welches durch das Induktionskochfeld von dem ersten Kochgeschirr empfangen wird, eine Frequenz-Modulation mit einer Frequenz von ca. 2 Hz auf. Die Modulation der Frequenz kann periodisch oder nichtperiodisch erfolgen.

Hierdurch kann das Induktionskochfeld eine Rückmeldung seitens des ersten Kochgeschirrs erhalten, dass dieses auf der ersten induktiven Kochstelle vorhanden ist. Dies kann sowohl der Identifikation eines Kochgeschirrs dienen, wie im Folgenden näher beschrieben, als auch der Kontrolle, ob ein bestimmtes Kochgeschirr bzw. ob überhaupt irgendein derartiges Kochgeschirr auf der ersten induktiven Kochstelle vorhanden ist. Weist das vom Induktionskochfeld empfangene Signal eines Kraftmesswertes nämlich keine Frequenz-Modulation auf, so kann darauf geschlossen werden, dass sich das erste Kochgeschirr, dessen Kraftsignal vom Induktionskochfeld dennoch empfangen werden kann, gar nicht auf der ersten induktiven Kochstelle befindet. Dies kann z.B. aus Sicherheitsgründen zur Abschaltung der induktiven Leistung der ersten induktiven Kochstelle führen.

Auf diese Weise kann eine einfache, kostengünstige und bzw. oder zuverlässige Kontrolle seitens des Induktionskochfeldes erfolgen, ob sich das erste Kochgeschirr tatsächlich auf der ersten induktiven Kochstelle befindet. Dies kann ohne elektrische Energiespeicher am ersten Kochgeschirr erfolgen, welche entladen sein könnten und ausgewechselt bzw. aufgeladen werden müssen.

Bevorzugt wird die Modulation der Frequenz kann periodisch, spätestens alle 120 Sekunden durchgeführt. Es ist auch möglich längere Abstände zwischen den einzelnen Modulationsphasen zu wählen. Die Wahl kürzerer Abstände ermöglicht eine unmittelbarere Reaktion des Kochfeldes auf ein Verschieben oder entfernen des Kochgeschirrs. Als besonders vorteilhaft wird dabei ein Abstand zwischen zwei Modulationsphasenangesehen, welcher kleiner als 10 Sekunden, vorzugsweise kleiner 4 Sekunden gewählt ist.

Darüber hinaus hat es sich bei der Erprobung als günstig erwiesen, dass die Abstände zwischen den einzelnen Modulationsphasen mindestens der Dauer der Modulationsphasen entsprechen, vorzugsweise sind die Abstände zwischen den einzelnen Modulationsphasen größer als das Dreifache der der Dauer der Modulationsphasen.

Besonders vorteilhaft ist, dass eine Fernwirkung ausgeschlossen werden kann, weil die zuvor beschriebene Erfindung den Kontakt zwischen erstem Kochgeschirr und Oberfläche des Induktionskochfeldes im Bereich der ersten induktiven Kochstelle erfordert bzw. die magnetischen Kräfte der induktiven ersten induktiven Kochstelle nur eine sehr kurze Reichweite haben. Ein Pairing ist nicht erforderlich.

Ferner kann die vorliegende Erfindung daher auch einfach und direkt auf Flächenkochfeldern angewendet werden, wobei eine einzelne Spule oder mehrere unmittelbar benachbarte Spulen die erste induktive Kochstelle bilden kann bzw. können.

Vorzugsweise wird für die Modulation der induktiven Leistung eine geringe Frequenz verwendet, so dass das erste Kochgeschirr trotz der Trägheit seiner Masse eine ausreichende Gewichtsschwankung ausführen kann, dass diese sich im Signal eines Kraftmesswertes wiederspiegeln kann. Beispielsweise können Frequenzen von wenigen Hz wie z.B. 2 Hz, 4 Hz etc. verwendet werden. Diese Frequenzen unterscheiden sich auch ausreichend von den Ansteuerungsfrequenzen der induktiven Leistung, welche üblicherweise im Bereich zwischen ca. 19 kHz und ca. 60 kHz liegen. Für die Übertragung des Signals eines Kraftmesswertes und ggfs. einer Energieübertragung zum ersten Kochgeschirr zur elektrischen Versorgung des Kraftmesssensors sind vorzugsweise Frequenzen von über 1 MHz zu verwenden, so dass alle elektromagnetischen Wellen zwischen Induktionskochfeld bzw. erster induktiver Kochstelle und erstem Kochgeschirr voneinander unbeeinflusst eingesetzt werden können. Hierdurch kann der Aufwand von Abschirmungen vermieden werden. Die einzelnen Frequenzen lassen sich dabei mittels Filterung voneinander trennen.

Gemäß einem Aspekt der vorliegenden Erfindung weist das Induktionskochfeld eine zweite induktive Kochstelle auf, wobei das Induktionskochfeld ferner ausgebildet ist, die induktive Leistung der zweiten induktiven Kochstelle in der Frequenz zu modulieren, wobei die beiden induktiven Kochstellen mit unterschiedlichen Frequenzen moduliert werden können. Auf diese Weise kann das erste Kochgeschirr einer bestimmten induktiven Kochstelle zugeordnet werden, da das Signal eines Kraftmesswertes des ersten Kochgeschirrs genau die Modulationsfrequenz aufweist, welche auch von der ersten induktiven Kochstelle ausgesendet wurde.

Wird beispielsweise die induktive Leistung der ersten induktiven Kochstelle mit einer Frequenz von 2 Hz moduliert und die induktive Leistung der zweiten induktiven Kochstelle mit einer Frequenz von 4 Hz, so muss sich das erste Kochgeschirr, falls dessen Signal eines Kraftmesswertes eine Modulation mit einer Frequenz von 2 Hz aufweist, auf der ersten induktiven Kochstelle befinden. Würde das Signal eines Kraftmesswertes des ersten Kochgeschirrs eine Modulation mit einer Frequenz von 4 Hz aufweisen, so müsste sich das erste Kochgeschirr auf der zweiten induktiven Kochstelle befinden und wäre dieser zuzuweisen.

Auf diese Weise kann eine einfache und zuverlässige Zuordnung eines Kochgeschirrs zu einer bestimmten induktiven Kochstelle oder zu einer bestimmten Spule bzw. Spulengruppe eines Flächenkochfeldes erfolgen.

Gemäß einem weiteren Aspekt der vorliegenden Erfindung weist das induktive Kochsystem ferner wenigstens ein zweites Kochgeschirr auf, welches auf der zweiten induktiven Kochstelle angeordnet ist, wobei das zweite Kochgeschirr einen Kraftsensor aufweist, der ausgebildet ist, eine Gewichtskraft des zweiten Kochgeschirrs gegenüber der Oberfläche der zweiten induktiven Kochstelle zu erfassen, und wobei das Induktionskochfeld ferner ausgebildet ist, ein Signal eines Kraftmesswertes von dem zweiten Kochgeschirr zu empfangen, wobei das Induktionskochfeld ferner ausgebildet ist, aufgrund der unterschiedlichen Frequenzen der Modulationen der induktiven Leistungen der beiden induktiven Kochstellen die beiden Kochgeschirre jeweils der entsprechenden induktiven Kochstelle zuzuordnen.

Auf diese Weise kann die zuvor bereits beschriebene Funktion der Zuordnung eines Kochgeschirrs zu einer bestimmten induktiven Kochstelle aufgrund der Frequenz der Modulation des erfassten Signals eines Kraftmesswertes auf zwei Kochgeschirre gleichzeitig angewendet werden. Wird dann eines der beiden Kochgeschirre von der induktiven Kochstelle entfernt, so kann dies erfindungsgemäß erkannt und die entsprechende induktive Kochstelle z.B. abgeschaltet werden, ohne dass der Betrieb der anderen induktiven Kochstelle beeinflusst wird.

Gemäß einem weiteren Aspekt der vorliegenden Erfindung weist das induktive Kochsystem eine zweite induktive Kochstelle auf, wobei das Induktionskochfeld ferner ausgebildet ist, die induktive Leistung der zweiten induktiven Kochstelle in der Frequenz zu modulieren, wobei die beiden induktiven Kochstellen mit der gleichen Frequenz moduliert werden können. Auf diese Weise können alternative Möglichkeiten zur Umsetzung der vorliegenden Erfindung bereitgestellt werden.

Gemäß einem weiteren Aspekt der vorliegenden Erfindung weist das induktive Kochsystem ferner wenigstens ein zweites Kochgeschirr auf, welches auf der zweiten induktiven Kochstelle angeordnet ist, wobei das zweite Kochgeschirr einen Kraftsensor aufweist, der ausgebildet ist, eine Gewichtskraft des zweiten Kochgeschirrs gegenüber der Oberfläche der zweiten induktiven Kochstelle zu erfassen, wobei das Induktionskochfeld ferner ausgebildet ist, ein Signal eines Kraftmesswertes von dem zweiten Kochgeschirr zu empfangen, wobei die Kraftsensoren der beiden Kochgeschirre ausgebildet sind, auf die Anregungsfrequenzen der beiden induktiven Kochstellen mit unterschiedlichen Resonanzen und bzw. oder mit unterschiedlichen Laufzeitverzögerungen zu reagieren, wobei das Induktionskochfeld ferner ausgebildet ist, aufgrund der unterschiedlichen Resonanzen bzw. Laufzeitverzögerungen der beiden Kraftsensoren der beiden Kochgeschirre die beiden Kochgeschirre jeweils der entsprechenden induktiven Kochstelle zuzuordnen.

Auf diese Weise kann ein Kochgeschirr nicht nur einer induktiven Kochstelle zugeordnet werden, wenn es auf dieser betrieben wird, weil sich die Frequenz der Modulation der induktiven Leistung in dem Signal eines Kraftmesswertes wiederfindet. Vielmehr kann über unterschiedliche Resonanzen bzw. Laufzeitverzögerungen auf die gleiche Frequenz der Modulation beider induktiver Kochstellen ein Kochgeschirr individuell erkannt werden. Hierdurch kann es ermöglicht werden, dass z.B. das erste Kochgeschirr von der ersten induktiven Kochstelle auf die zuvor beschriebene Art und Weise erkannt und von dem Induktionskochfeld individualisiert wird. Wird dann das erste Kochgeschirr vom Benutzer von der ersten induktiven Kochstelle auf die zweite induktive Kochstelle bewegt, so kann das erste Kochgeschirr von dem Induktionskochfeld auf der zweiten induktiven Kochstelle aufgrund seiner Resonanz bzw. aufgrund seiner Laufzeitverzögerung als erstes Kochgeschirr erkannt werden.

Hierdurch kann ein Vertauschen von Kochgeschirren durch den Benutzer auf dem Induktionskochfeld erkannt werden. Dies kann die Sicherheit der Benutzung sowie dessen Komfort erhöhen, weil das Induktionskochfeld selbsttätig z.B. das Kochprogramm der ersten induktiven Kochstelle auf der zweiten induktiven Kochstelle fortführen kann, sobald der Benutzer das erste Kochgeschirr von der ersten induktiven Kochstelle auf die zweite induktive Kochstelle bewegt hat.

Der Kraftsensor kann durch eine elektromagnetische Welle, welche z.B. von einer Antenne im Kochfeld ausgesendet werden kann, mit einer Frequenz z.B. im Bereich zwischen ca. 433MHz bis ca. 2,4 GHz angeregt werden. Die elektromagnetische Welle kann von einer Antenne des Kraftsensors aufgenommen und deren Energie durch z.B. Piezokristalle in eine mechanische Oberflächenwelle der gleichen Frequenz umgewandelt werden. Die mechanischen Schwingungen des Piezokristalls können durch den inversen Piezo-Effekt wiederum in elektrische Signale umgewandelt werden, die von der Antenne des Kraftsensors an die Antenne im Kochfeld gesendet werden können.

Nun kann eine auf den Kraftsensor wirkende Kraft z.B. nach den folgenden zwei Verfahren gemessen werden:
a) Der Kraftsensor kann ein Resonator sein, der abhängig von der Kraft (den Spannungen) unterschiedliche Resonanzfrequenzen in einem Frequenzband von ca. 1,5 MHz aufweisen kann. Zur Messung der Resonanzfrequenz kann die elektromagnetische Anregungsfrequenz in dem entsprechenden Frequenzband variiert werden. Sind die Anregungsfrequenz und die Resonanzfrequenz annähernd gleich, ist das Echo, das der Kraftsensor aussendet, am stärksten. Die Antenne im Kochfeld kann dann das Echo des gesamten Anregungsfrequenzbandes empfangen und die Amplitude des Echos auswerten. Die Frequenz mit dem lautesten Echo ist die kraftabhängige Resonanzfrequenz des Kraftsensors. Diese Frequenz kann nun in eine Kraft umgerechnet werden. Um zwei Kraftsensoren zu unterscheiden, kann man die kraftabhängigen Frequenzbänder derart gestalten, dass sie sich nicht überschneiden.
b) Der Kraftsensor weist eine Laufzeitverzögerung (Delay-Line) auf. Die Anregung des Kraftsensors erfolgt mit einer bestimmten Frequenz. Dabei handelt es sich um ein kurzzeitiges Burst Signal mit z.B. fünf Perioden. Wiederum wird das anregende Signal in eine mechanische Oberflächenwelle umgewandelt. Diese mechanische Welle kann in dem Kraftsensor reflektiert und durch die Elektroden und Antenne des Kraftsensors an die Antenne im Kochfeld zurückgeschickt werden. Das Anregungssignal kann sehr kurz im Vergleich zur kraftabhängigen Laufzeit der mechanischen Welle im Kraftsensor sein, so dass sich zwischen Senden und Empfangen eine kraftabhängige Laufzeitverzögerung ergibt. Um zwei Kraftsensoren zu unterscheiden, kann man die Kristalle derart gestalten, dass sich die kraftabhängigen Laufzeitverzögerungen nicht überschneiden.

Gemäß einem weiteren Aspekt der vorliegenden Erfindung ist der Kraftsensor innerhalb eines Standfußes des Kochgeschirrs angeordnet, mit dem ein Kochgeschirrkörper des Kochgeschirrs auf der Oberfläche der induktiven Kochstelle aufliegen kann. Hierdurch kann die Gewichtskraft, welche das Kochgeschirr auf die Oberfläche der induktiven Kochstelle ausübt, bzw. das Gewicht, welches das Kochgeschirr besitzt, bzw. dessen Veränderung möglichst direkt und verlässlich erfasst werden. Dies kommt sowohl der Nutzung des Gewichts an sich durch das Induktionskochfeld im Rahmen z.B. eines automatischen Kochprogramms zugute als auch kann die Modulation des Signals eines Kraftmesswertes auf diese Weise möglichst deutlich und zuverlässig erfasst werden.

Gemäß einem weiteren Aspekt der vorliegenden Erfindung ist der Kraftsensor ein RFID-Sensor (Radio-Frequency-Identification-Sensor) oder ein SAW-Sensor (Surface-Acoustic-Wave-Sensor). Vorteilhaft ist in beiden Fällen, dass derartige Sensoren keine eigene elektrische Energieversorgung benötigen, so dass auf Batterien etc. verzichtet werden kann. Vielmehr kann eine elektrische Energieversorgung mittels elektromagnetischer Wellen seitens des Induktionskochfeldes erfolgen.

Vorteilhaft ist insbesondere bei SAW-Sensoren, dass diese spezifische Resonanzfrequenzen bzw. Laufzeitverzögerungen aufweisen können, anhand derer eine eindeutige Identifikation eines SAW-Sensors und damit des Kochgeschirrs ohne zusätzliche Maßnahmen und insbesondere Bauteile möglich ist. Auf diese Weise kann ein Vertauschen von Kochgeschirren erkannt werden.

Gemäß einem weiteren Aspekt der vorliegenden Erfindung ist der Kraftsensor gegenüber dem Kochgeschirrkörper und bzw. oder gegenüber der der Oberfläche der induktiven Kochstelle durch einen thermisch isolierenden Körper beabstandet. Hierdurch kann der Kraftsensor vor der Erwärmung des Kochgeschirrkörpers bzw. der induktiven Kochstelle geschützt werden.

Gemäß einem weiteren Aspekt der vorliegenden Erfindung ist der Kraftsensor in den thermisch isolierenden Körper eingebettet. Auf diese Weise kann der Kraftsensor in alle Richtungen und möglichst einfach und zuverlässig vor der Erwärmung des Kochgeschirrkörpers bzw. der induktiven Kochstelle geschützt werden. Ferner kann auf Untersetzer für das Kochgeschirr verzichtet werden.

Gemäß einem weiteren Aspekt der vorliegenden Erfindung ist der thermisch isolierende Körper elastisch ausgebildet. Hierdurch können mögliche Unebenheiten der Kontaktfläche zwischen der Unterseite des Kochgeschirrs bzw. der Unterseite des Kraftsensors und der Oberfläche der induktiven Kochstelle bzw. des Induktionskochfeldes ausgeglichen werden. Dies ist vorteilhaft, um ein möglichst aussagekräftiges und deutliches Signal des Kraftsensors zu erhalten, aus dem sich die Modulation der Frequenz der induktiven Leistung der Kochstelle entsprechend deutlich und damit verlässlich auswerten lassen kann. Als elastisches thermisch isolierendes Material kann beispielsweise Silikon verwendet werden.

Die Modulation der Frequenz der induktiven Leistung jeweiligen Kochstelle erfolgt vorzugsweise nur über einen kurzen Zeitraum. Dies ist Ausreichend um ein Signal zu erhalten welches eine Zuordnung von Garbehälter und Kochstelle ermöglicht. Ein kurzer Zeitraum ist als eine Dauer kleiner 5000 Millisekunden zu verstehen. Für eine sichere zuordnung hat es sich als vorteilhaft erwiesen, dass die Modulation länger andauert als 20 Millisekunden. Als besonders günstig hat sich eine Dauer der Modulation erwiesen, welche zwischen 453 Millisekunden und 2200 Millisekunden liegt.

Die vorliegende Erfindung betrifft auch ein Induktionskochfeld zur Verwendung in einem induktiven Kochsystem wie zuvor beschrieben mit wenigstens einer ersten induktiven Kochstelle, die ausgebildet ist, so dass ihre induktive Leistung in der Frequenz moduliert werden kann, wobei das Induktionskochfeld ausgebildet ist, ein Signal eines Kraftmesswertes eines Kraftsensors von einem ersten Kochgeschirr zu empfangen, welches auf der ersten induktiven Kochstelle angeordnet ist. Die Eigenschaften und Vorteile eines derartigen Induktionskochfeldes wurden bereits zuvor mit Bezug zu dem erfindungsgemäßen induktiven Kochsystem beschrieben und sollen daher hier nicht wiederholt werden.

Die vorliegende Erfindung betrifft auch ein Verfahren zum Betrieb eines induktiven Kochsystems wie zuvor beschrieben mit den Schritten:
- Aussenden einer induktiven Leistung von einer ersten induktiven Kochstelle eines Induktionskochfeldes zu einem ersten Kochgeschirr, welches auf der ersten induktiven Kochstelle angeordnet ist,
   wobei die induktive Leistung der ersten induktiven Kochstelle in der Frequenz moduliert ist,
- Empfangen eines Signals eines Kraftmesswertes eines Kraftsensors von dem ersten Kochgeschirr,
   wobei das Signal des Kraftmesswertes eine Frequenz-Modulation aufweist, die der Modulation der Frequenz der induktiven Leistung der ersten induktiven Kochstelle entspricht, und
- Zuordnen des ersten Kochgeschirrs zu der ersten induktiven Kochstelle aufgrund der gleichen Frequenzen der Modulationen der elektrischen Leistung und des Signals des Kraftmesswertes.

Auf diese Weise kann, wie bereits zuvor mit Bezug zu dem erfindungsgemäßen induktiven Kochsystem beschrieben, eine Zuordnung eines Kochgeschirrs zu einer Kochstelle erfolgen, indem die elektrische Leistung der Kochstelle mit einer Frequenz moduliert wird, die sich in dem Signal eines Kraftmesswertes des Kochgeschirrs wiederspiegelt.

Die vorliegende Erfindung betrifft auch ein Verfahren zum Betrieb eines induktiven Kochsystems wie zuvor beschrieben mit den Schritten:
- Aussenden einer induktiven Leistung von einer ersten induktiven Kochstelle eines Induktionskochfeldes zu einem ersten Kochgeschirr, welches auf der ersten induktiven Kochstelle angeordnet ist,
   wobei die induktive Leistung der ersten induktiven Kochstelle in der Frequenz moduliert ist,
- Empfangen eines Signals eines Kraftmesswertes eines Kraftsensors von dem ersten Kochgeschirr,
   wobei das Signal des Kraftmesswertes eine Resonanz und bzw. oder eine Laufzeitverzögerung auf die Anregungsfrequenz der ersten induktiven Kochstelle aufweist, und
- Zuordnen des ersten Kochgeschirrs zu der ersten induktiven Kochstelle aufgrund seiner Resonanz bzw. Laufzeitverzögerung auf die Anregungsfrequenz der ersten induktiven Kochstelle.

Auf diese Weise kann, wie bereits zuvor mit Bezug zu dem erfindungsgemäßen induktiven Kochsystem beschrieben, eine Erkennung eines konkreten Kochgeschirrs aufgrund seines individuellen Resonanz- bzw. Laufzeitverhaltens erfolgen, indem sich die Frequenz-Modulation der elektrischen Leistung der induktiven Kochstelle in einer Resonanz bzw. in einer Laufzeitverzögerung im Signal eines Kraftmesswertes des Kochgeschirrs wiederspiegelt, welche genau dieses Kochgeschirr auszeichnet und damit von anderen Kochgeschirren unterscheidbar macht. Hierdurch kann nicht nur ein Kochgeschirr einer induktiven Kochstelle zugeordnet werden, sondern es kann auch eine Bewegung des Kochgeschirrs auf eine andere induktive Kochstelle erkannt und verfolgt werden.

Gemäß einem Aspekt der vorliegenden Erfindung weisen die Verfahren die weiteren Schritte auf:
- Überprüfen des Empfangens des Signals eines Kraftmesswertes von dem ersten Kochgeschirr, und
- in dem Fall, dass das Signal eines Kraftmesswertes von dem ersten Kochgeschirr empfangen wird, Fortführen des Betriebes der ersten induktiven Kochstelle, oder
- in dem Fall, dass kein Signal eines Kraftmesswertes von dem ersten Kochgeschirr empfangen wird, Auslösen einer Reaktion der ersten induktiven Kochstelle, vorzugsweise Beenden des Betriebes der ersten induktiven Kochstelle.

Auf diese Weise kann erfindungsgemäß eine Überwachung erfolgen, ob sich auf einer induktiven Kochstelle überhaupt ein Kochgeschirr bzw. ein bestimmtes Kochgeschirr befindet. Hierauf kann dann reagiert werden, indem bei einer anhaltenden Anwesenheit eines Kochgeschirrs der Betrieb der ersten induktiven Kochstelle mit einer vom Benutzer gewählten Leistungseinstellung oder mittels eines automatischen Kochprogramms fortgesetzt wird.

Wird jedoch eine Abwesenheit des erfindungsgemäß modulierten Signals eines Kraftsensors erkannt, kann z.B. aus Sicherheitsgründen der Betrieb der induktiven Kochstelle unterbrochen oder ausgesetzt werden. Dies kann unverzüglich oder nach Ablauf einer vorbestimmten Zeitdauer geschehen, damit dem Benutzer etwas Zeit gegeben werden kann, ein versehentliches Entfernen oder teilweise Verrücken des Kochgeschirrs noch zu korrigieren, ohne die Einstellungen des Kochprozesses neu starten zu müssen.

Dies kann bei einem individuell identifizierbaren Kochgeschirr auch dazu führen, dass die übrigen induktiven Kochstellen danach abgefragt werden, ob das Kochgeschirr vom Benutzer dorthin bewegt wurde, um die Einstellungen des Kochprozesses von der bisher genutzten induktiven Kochstelle auf die neue induktive Kochstelle zu übertragen und auf diese Weise selbsttätig und für den Benutzer komfortabel einen möglichst unterbrechungsfreien Kochprozess zu ermöglichen.

Mehrere Ausführungsbeispiele der Erfindung sind in den Zeichnungen rein schematisch dargestellt und werden nachfolgend näher beschrieben. Es zeigt
- Figur 1: eine schematische Draufsicht auf ein erfindungsgemäßes Kochsystem;
- Figur 2: eine seitliche schematische Darstellung der Figur 1;
- Figur 3a: ein seitliche schematische Schnittdarstellung eines Standfußes eines erfindungsgemäßen Kochgeschirrs gemäß eines ersten Ausführungsbeispiels;
- Figur 3b: ein seitliche schematische Schnittdarstellung eines Standfußes eines erfindungsgemäßen Kochgeschirrs gemäß eines zweiten Ausführungsbeispiels;
- Figur 3c: ein seitliche schematische Schnittdarstellung eines Standfußes eines erfindungsgemäßen Kochgeschirrs gemäß eines dritten Ausführungsbeispiels;
- Figur 3d: ein seitliche schematische Schnittdarstellung eines Standfußes eines erfindungsgemäßen Kochgeschirrs gemäß eines vierten Ausführungsbeispiels;
- Figur 4: ein Ablaufdiagramm zweier erfindungsgemäßer Verfahren; und
- Figur 5: eine schematische Schnittdarstellung eines Kraftsensors von oben.

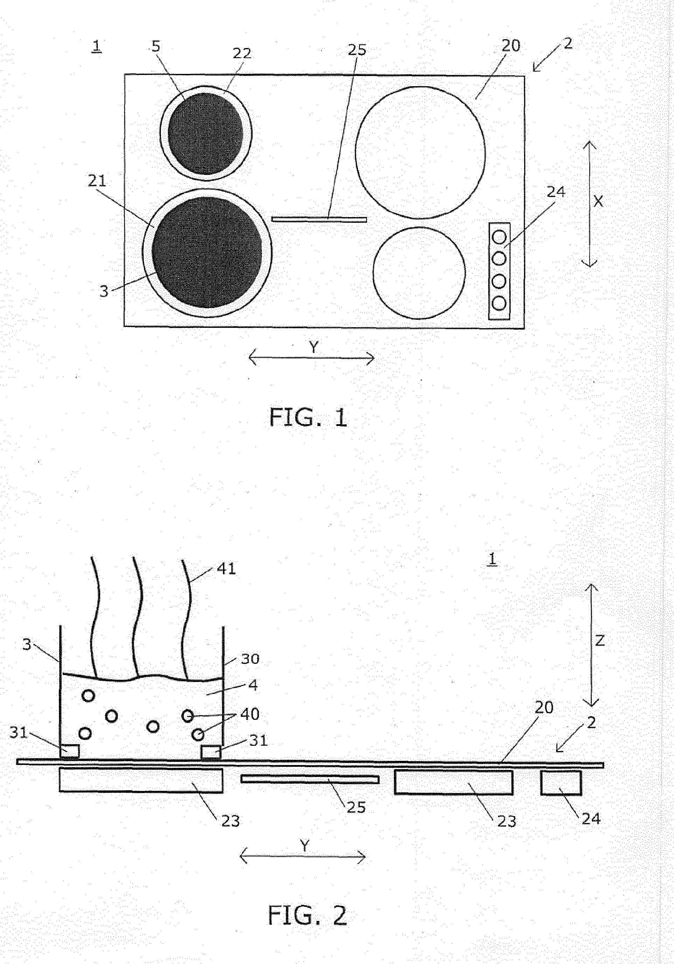

Figur 1 zeigt eine schematische Draufsicht auf ein erfindungsgemäßes Kochsystem 1. Figur 2 zeigt eine seitliche schematische Darstellung der Figur 1. Das Kochsystem 1 weist ein Induktionskochfeld 2 auf, welches sich im Wesentlichen in der horizontalen Ebene erstreckt, d.h. in einer Längsrichtung X, welche auch als Tiefe X bezeichnet werden kann, und in einer hierzu senkrechten Querrichtung Y, welche auch als Breite Y bezeichnet werden kann. In der vertikalen Richtung Z, welche auch als Höhe Z bezeichnet werden kann und sowohl zur Längsrichtung X als auch zur Querrichtung Y senkrecht angeordnet ist, sind ein erstes Kochgeschirr 3 sowie ein zweites Kochgeschirr 5 auf dem Induktionskochfeld 2 angeordnet.

Das Induktionskochfeld 2 weist eine Kochfeldplatte 20 mit einer ersten induktiven Kochstelle 21 und mit einer zweiten induktiven Kochstelle 22 auf. Weitere induktive Kochstellen sind vorhanden, sollen jedoch nicht näher betrachtet werden. Beide induktive Kochstellen 21, 22 weisen jeweils ein Heizelement 23 in Form einer Induktionsspule 23 auf, welches jeweils in der Höhe Z unterhalb der Kochfeldplatte 20 angeordnet und ausgebildet ist, ein auf der jeweiligen Kochstelle 21, 22 befindliches Kochgeschirr 3, 5 induktiv zu erwärmen. Zur Bedienung der Kochstellen 21, 22 wie z.B. zur Einstellung der jeweiligen Leistungsstufen ist eine Bedien- und Steuerungseinheit 24 vorgesehen. Das Induktionskochfeld 2 weist ferner eine Empfängereinheit 25 in Form einer Antenne 25 auf, dessen Funktion im Folgenden noch erläutert werden wird.

Die beiden Kochgeschirre 3, 5 sind identisch aufgebaut, so dass hier lediglich das erste Kochgeschirr 3 konkret betrachtet werden soll. Das erste Kochgeschirr 3 ist als Kochtopf 3 ausgebildet. Das erste Kochgeschirr 3 weist einen Kochgeschirrkörper 30 auf, in dem das Gargut 4 aufgenommen werden kann. In seinem in der Höhe Z unteren Bereich weist das erste Kochgeschirr 3 der Oberfläche der Kochfeldplatte 20 zugewandt zwei Standfüße 31 auf, mittels derer das erste Kochgeschirr 3 auf der Kochfeldplatte 20 aufgestellt ist. Innerhalb eines Standfußes 31 ist ein Kraftsensor 32 in Form eines SAW-Sensors 32 angeordnet.

Der Kraftsensor 32 wird dabei von einem elastischen thermisch isolierenden Körper 33 sowohl gegenüber dem Kochgeschirrkörper 30 als auch gegenüber der Kochfeldplatte 20 thermisch derart isoliert, dass eine Überhitzung und Beschädigung bzw. Zerstörung des Kraftsensors 32 durch die Erwärmung des Kochprozesses vermieden werden kann. Gleichzeitig kann sich der Körper 21 aufgrund seiner Elastizität der Oberfläche der Kochfeldplatte 20 in einem gewissen Maße anpassen, um einen möglichst flächigen Kontakt des Kraftsensors 32 und damit eine möglichst gute Kraftübertragung zu ermöglichen, die eine möglichst genaue Kraftmessung gewährleisten soll.

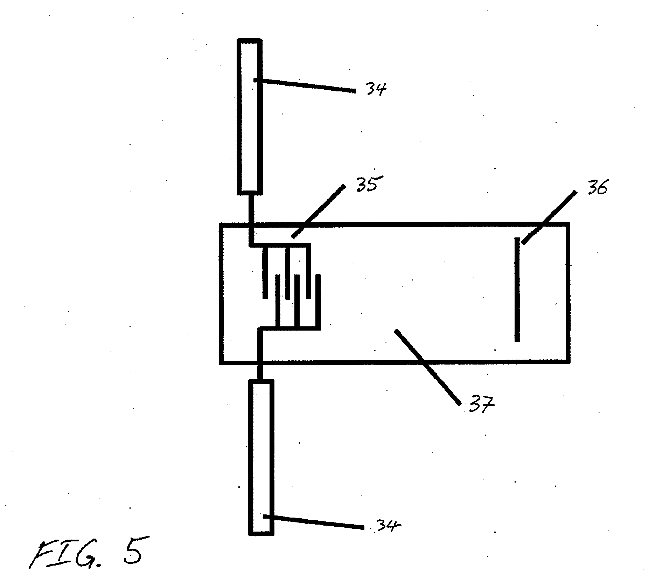

Der Kraftsensor 32 an sich, der in der Figur 5 in einer schematischen Schnittdarstellung von oben dargestellt ist, weist ein Paar von Antenne 34 auf, welcher über einen Interdigitalwandler 35 miteinander verbunden sind. Der Kraftsensor 32 weist ferner einen Reflektor 36 und einen piezoelektrischen Kristall 37 auf.

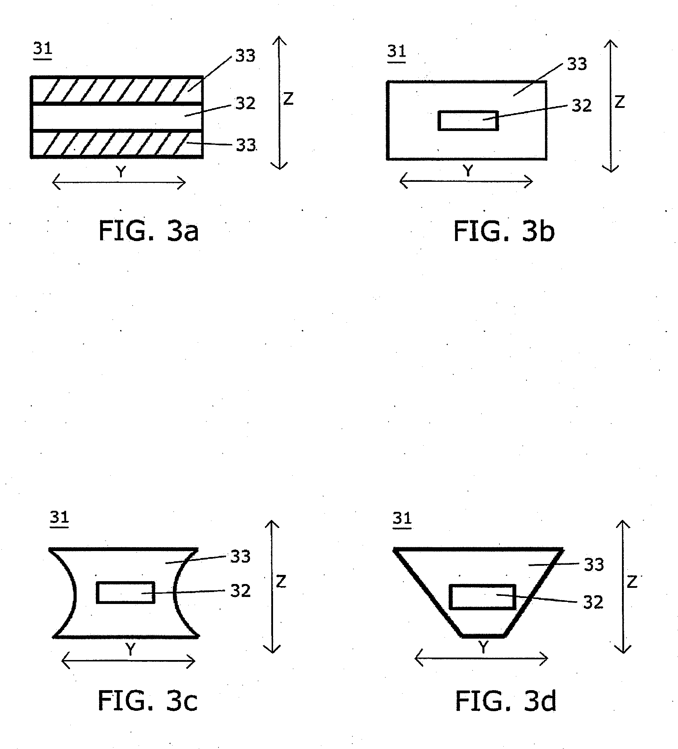

Die Figuren 3a bis 3d zeigen verschiedene seitliche schematische Schnittdarstellungen des Standfußes 31 gemäß eines ersten bis vierten Ausführungsbeispiels. Gemäß des ersten Ausführungsbeispiels der Figur 3a weist der Standfuß 31 zwei Schichten des elastischen thermisch isolierenden Körpers 33 auf, zwischen denen in der Höhe Z der Kraftsensor 32 als Schicht angeordnet ist. Gemäß des zweiten Ausführungsbeispiels der Figur 3b ist der Kraftsensor 32 innerhalb eines rechteckigen elastischen thermisch isolierenden Körpers 33 angeordnet und wird vollständig von diesem umgeben. Dies entspricht dem dritten und vierten Ausführungsbeispiel der Figuren 3c und 3d, wobei hier die Form des elastischen thermisch isolierenden Körpers 33 mittig in der Höhe Z eingeschnürt, siehe Figur 3c, bzw. nach unten in der Höhe Z trapezförmig zulaufend ist, siehe Figur 3d.

Die Kraftmesswerte des Kraftsensors 32 können von dem ersten Kochgeschirr 3 drahtlos an das Induktionskochfeld 2 übertragen werden. Dies kann bei dem verwendeten SAW-Sensor 32 mittels elektromagnetischer Wellen geschehen. Diese elektromagnetischen Wellen können mittels der Antenne 25 des Induktionskochfeldes 2 empfangen werden. Eine Verarbeitung der empfangenen Signale wie z.B. Filterung sowie weitere Verarbeitung der Kraftmesswerte kann z.B. mittels der Bedien- und Steuerungseinheit 24 erfolgen.

Als Gargut 4 ist innerhalb des Kochgeschirrkörpers 30 in diesem Fall Wasser 4 vorhanden, welches erwärmt werden soll. Das erwärmte Wasser 4 bildet entsprechend Dampfblasen 40 innerhalb des Wassers 4 sowie Dampf 41, der von der Oberfläche des Wassers 4 in der Höhe Z nach oben steigt.

Erfindungsgemäß ist das Induktionskochfeld 2 ausgebildet, die induktive Leistung der beiden induktiven Kochstellen 21, 22 in der Frequenz zu modulieren. Dies kann mittels der Bedien- und Steuerungseinheit 24 erfolgen. Hierbei wird eine geringe Modulationsfrequenz von z.B. 2 Hz verwendet, da es der Zweck dieser Frequenzmodulation ist, das über der jeweiligen induktiven Kochstelle 21, 22 angeordnete Kochgeschirr 3, 5 mit der Modulationsfrequenz in der Höhe Z zu bewegen. Diese Bewegung führt zu einer periodischen Ab- bzw. Zunahme der Belastung der jeweiligen induktiven Kochstelle 21, 22 durch das Gewicht des Kochgeschirrs 3, 5, welches sich in einem schwankenden Kraftmesswert des Kraftsensors 32 wiederspiegelt. Da der Kraftmesswert des Kraftsensors 32 von dem Induktionskochfeld 2 erhalten wird, kann das Schwanken des Kraftmesswertes des Kraftsensors 32 einer induktiven Kochstelle 21, 22 mit der Modulation dessen induktiver Leistung verglichen werden.

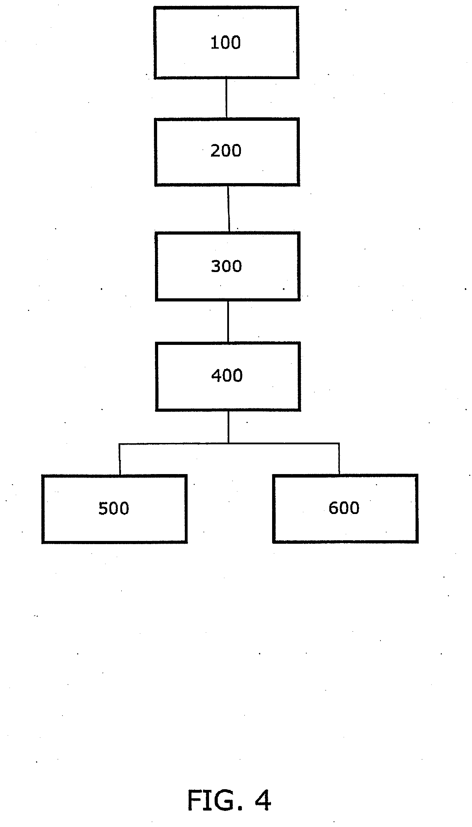

Hierdurch ist es zum einem möglich, die Anwesenheit bzw. Abwesenheit eines Kochgeschirrs 3, 5 auf einer induktiven Kochstelle 21, 22 allgemein zu erkennen. Zum anderen kann auch ein Kochgeschirr 3, 5 individuell erkannt werden. Diese beiden Möglichkeiten werden im Folgenden anhand zweier entsprechender Verfahren näher erläutert, welche beide durch das Ablaufdiagramm der Figur 4 illustriert werden:
In einem ersten Schritt 100 wird eine induktive Leistung von der Induktionsspule 22 der ersten induktiven Kochstelle 21 des Induktionskochfeldes 2 zu dem ersten Kochgeschirr 3 ausgesendet, welches auf der ersten induktiven Kochstelle 21 angeordnet ist. Die induktive Leistung der ersten induktiven Kochstelle 21 wird dabei von der Bedien- und Steuerungseinheit 24 in der Frequenz moduliert.

In einem zweiten Schritt 200 wird das Signal eines Kraftmesswertes des Kraftsensors 32 von dem ersten Kochgeschirr 3 durch die Antenne 25 des Induktionskochfeldes 2 empfangen. Wie zuvor beschrieben, weist das Signal des Kraftmesswertes des ersten Kochgeschirrs 3 eine Frequenz-Modulation auf, die der Modulation der Frequenz der induktiven Leistung der ersten induktiven Kochstelle 21 entspricht.

Auf diese Weise kann in einem dritten Schritt 300 eine Zuordnung des ersten Kochgeschirrs 3 zu der ersten induktiven Kochstelle 21 aufgrund der gleichen Frequenzen der Modulation der elektrischen Leistung und des Signals des Kraftmesswertes erfolgen. Hierdurch kann eine allgemeine Zuordnung eines Kochgeschirrs 3 zu einer induktiven Kochstelle 21 erfolgen.

Alternativ kann in dem zweiten Schritt 200 ein Signal eines Kraftmesswertes des Kraftsensors 32 von dem ersten Kochgeschirr 3 empfangen werden, wobei das Signal des Kraftmesswertes eine Resonanz oder eine Laufzeitverzögerung auf die Frequenz-Modulation der induktiven Leistung der ersten induktiven Kochstelle 21 aufweist.

In diesem Fall kann in dem dritten Schritt 300 eine Zuordnung des ersten Kochgeschirrs 3 zu der ersten induktiven Kochstelle 21 aufgrund seiner Resonanz bzw. aufgrund seiner Laufzeitverzögerung auf die Frequenz-Modulation der induktiven Leistung der ersten induktiven Kochstelle 21 erfolgen. Auf diese Weise kann eine individualisierte Zuordnung eines Kochgeschirrs 3 zu einer induktiven Kochstelle 21 erfolgen.

In jedem Fall kann in einem vierten Schritt 400 eine Überprüfung des Empfangens des Signals eines Kraftmesswertes von dem ersten Kochgeschirr 21 erfolgen. Wird dabei festgestellt, dass das Signal eines Kraftmesswertes von dem ersten Kochgeschirr 21 empfangen wird, kann der Betrieb der ersten induktiven Kochstelle 21 in einem fünften Schritt 500 fortgeführt werden. Wird alternativ festgestellt, dass kein Signal eines Kraftmesswertes von dem ersten Kochgeschirr 21 empfangen wird, kann in einem sechsten Schritt 600 eine Reaktion der ersten induktiven Kochstelle 21 hierauf ausgelöst werden. Dies kann vorzugsweise das Beenden des Betriebes der ersten induktiven Kochstelle 21 sein, um eine mögliche und ungewollte Erwärmung eines anderen Kochgeschirrs zu vermeiden.

### Bezugszeichenliste (Bestandteil der Beschreibung)

- X: Längsrichtung; Tiefe
- Y: Querrichtung; Breite
- Z: vertikale Richtung; Höhe

- 1: Induktives Kochsystem

- 2: Induktionskochfeld
- 20: Kochfeldplatte
- 21: erste induktive Kochstelle
- 22: zweite induktive Kochstelle
- 23: Heizelement; Induktionsspule
- 24: Bedien-/Steuerungseinheit
- 25: Empfängereinheit des Induktionskochfeldes 2; Antenne des Induktionskochfeldes 2

- 3: erstes Kochgeschirr; erster Kochtopf
- 30: Kochgeschirrkörper; Kochtopfkörper
- 31: Standfüße
- 32: Kraftsensor
- 33: elastischer thermisch isolierender Körper
- 34: Antenne des Kraftsensors 32
- 35: Interdigitalwandler des Kraftsensors 32
- 36: Reflektor des Kraftsensors 32
- 37: piezoelektrischer Kristall des Kraftsensors 32

- 4: Gargut; Wasser
- 40: Dampfblasen
- 41: Dampf

- 5: zweites Kochgeschirr; zweiter Kochtopf

- 100: Aussenden einer induktiven Leistung
- 200: Empfangen eines Signals eines Kraftmesswertes
- 300: Zuordnen eines ersten Kochgeschirrs 3 zu einer ersten induktiven Kochstelle 21
- 400: Überprüfen des Empfangens des Signals eines Kraftmesswertes
- 500: Fortführen des Betriebes des Induktionskochfeldes 2
- 600: Auslösen einer Reaktion des Induktionskochfeldes 2

## Patentansprüche

1. Induktives Kochsystem (1),
mit einem Induktionskochfeld (2) mit mehreren induktiven Kochstellen (21) und jeweils einem als Spule ausgeführtem induktiven Heizelement (23),
wobei das Induktionskochfeld (2) eine erste induktive Kochstelle (21) mit wenigstens einem ersten Heizelement (23) aufweist, wobei das erste Heizelement (23) der ersten induktiven Kochstelle (21) zugeordnet ist, und
wobei das Induktionskochfeld (2) eine zweite induktive Kochstelle (22) mit wenigstens einem zweiten Heizelement (23) aufweist, wobei das zweite Heizelement (23) der zweiten induktiven Kochstelle (21) zugeordnet ist, undmit wenigstens einem ersten Kochgeschirr (3), welches auf der ersten induktiven Kochstelle (21) angeordnet ist,
und mit einem Kraftsensor (32), welcherausgebildet ist, eine Gewichtskraft und/oder eine Veränderung der Gewichtskraft des ersten Kochgeschirrs (3) gegenüber der Oberfläche der ersten induktiven Kochstelle (21) als einen Kraftmesswert zu erfassen und ein Signal des Kraftmesswertes zu senden, und
wobei das Induktionskochfeld (2) ausgebildet ist, das Signal des Kraftmesswertes von dem Kraftsensor (32) ersten Kochgeschirr (3) zu empfangen,
**dadurch gekennzeichnet, dass**
der Kraftsensor (32) in dem Kochgeschirr (3) ausgebildet ist und
das Induktionskochfeld (2) zum Empfangen des Signals des Kraftmesswertes eine Antenne (25) aufweist, welche getrennt von den Spulen der Heizelemente (23) ausgebildet ist, und
das Induktionskochfeld (2) ausgebildet ist, mittels des wenigstens einen ersten Heizelementes (23) der ersten induktiven Kochstelle (21) die induktive Leistung der ersten induktiven Kochstelle (21), insbesondere in einem kurzen Zeitraum, in der Frequenz zu modulieren und
das Induktionskochfeld (2) ausgebildet ist, mittels des wenigstens einen zweiten Heizelements (23) der zweiten induktiven Kochstelle (22) die induktive Leistung der zweiten induktiven Kochstelle (22), insbesondere in einem kurzen Zeitraum, in der Frequenz zu modulieren,
wobei die beiden induktiven Kochstellen (21, 22) mit unterschiedlichen Frequenzen moduliert werden können,
und der Kraftsensor (32) ausgebildet ist, ein Signal des während der Modulation der Frequenz der induktiven Leistung einen, durch die Modulation der Frequenz der induktiven Leistung veränderten Kraftmesswerts zu senden.

2. Induktives Kochsystem (1) gemäß Anspruch 1, **gekennzeichnet durch**
wenigstens ein zweites Kochgeschirr (5), welches auf der zweiten induktiven Kochstelle (22) angeordnet ist,
wobei das zweite Kochgeschirr (5) einen Kraftsensor (32) aufweist, der ausgebildet ist, eine Gewichtskraft und/oder eine Veränderung der Gewichtskraft des zweiten Kochgeschirrs (5) gegenüber der Oberfläche der zweiten induktiven Kochstelle (22) als einen Kraftmesswert zu erfassen und ein Signal des Kraftmesswertes zu senden, und
wobei das Induktionskochfeld (2) ferner ausgebildet ist, das Signal des Kraftmesswertes von dem Kraftsensor (32) des zweiten Kochgeschirrs (3) zu empfangen,
wobei das Induktionskochfeld (2) ferner ausgebildet ist, aufgrund der unterschiedlichen Frequenzen der Modulationen der induktiven Leistungen der beiden induktiven Kochstellen (21, 22) die beiden Kochgeschirre (3, 5) jeweils der entsprechenden induktiven Kochstelle (21, 22) zuzuordnen.

3. Induktives Kochsystem (1) gemäß Anspruch 1, **gekennzeichnet durch**
eine zweite induktive Kochstelle (21),
wobei das Induktionskochfeld (2) ferner ausgebildet ist, die induktive Leistung der zweiten induktiven Kochstelle (22) in der Frequenz zu modulieren,
wobei die beiden induktiven Kochstellen (21, 22) mit der gleichen Frequenz moduliert werden können.

4. Induktives Kochsystem (1) gemäß Anspruch 1 oder 3, **gekennzeichnet durch**
wenigstens ein zweites Kochgeschirr (5), welches auf der zweiten induktiven Kochstelle (22) angeordnet ist,
wobei das zweite Kochgeschirr (5) einen Kraftsensor (32) aufweist, der ausgebildet ist, eine Gewichtskraft des zweiten Kochgeschirrs (5) gegenüber der Oberfläche der zweiten induktiven Kochstelle (22) zu erfassen,
wobei das Induktionskochfeld (2) ferner ausgebildet ist, ein Signal eines Kraftmesswertes von dem zweiten Kochgeschirr (3) zu empfangen,
wobei die Kraftsensoren (32) der beiden Kochgeschirre (3, 5) ausgebildet sind, auf die Anregungsfrequenzen der beiden induktiven Kochstellen (21, 22) mit unterschiedlichen Resonanzen und/oder mit unterschiedlichen Laufzeitverzögerungen zu reagieren,
wobei das Induktionskochfeld (2) ferner ausgebildet ist, aufgrund der unterschiedlichen Resonanzen bzw. Laufzeitverzögerungen der beiden Kraftsensoren (32) der beiden Kochgeschirre (3, 5) die beiden Kochgeschirre (3, 5) jeweils der entsprechenden induktiven Kochstelle (21, 22) zuzuordnen.

5. Induktives Kochsystem (1) gemäß einem der vorherigen Ansprüche, **dadurch gekennzeichnet, dass**
das Kochgeschirr (3, 5) wenigstens einen Standfuß (31) aufweist, mit dem ein Kochgeschirrkörper (30) des Kochgeschirrs (3; 5) auf der Oberfläche der induktiven Kochstelle (21) aufliegen kann, und
der Kraftsensor (32) innerhalb des Standfußes (31) des Kochgeschirrs (3; 5) angeordnet ist.

6. Induktives Kochsystem (1) gemäß einem der vorherigen Ansprüche, **dadurch gekennzeichnet, dass**
der Kraftsensor (32) ein RFID-Sensor (32) oder ein SAW-Sensor (32) ist.

7. Induktives Kochsystem (1) gemäß einem der vorherigen Ansprüche, **dadurch gekennzeichnet, dass**
das Kochgeschirr (3, 5) wenigstens einen thermisch isolierenden Körper (33) aufweist,
wobei der Kraftsensor (32) durch den thermisch isolierenden Körper (33) gegenüber dem Kochgeschirrkörper (30) und/oder gegenüber der Oberfläche der induktiven Kochstelle (21; 22) beabstandet ist.

8. Induktives Kochsystem (1) gemäß Anspruch 7, **dadurch gekennzeichnet, dass** der Kraftsensor (32) in den thermisch isolierenden Körper (33) eingebettet ist.

9. Induktives Kochsystem (1) gemäß Anspruch 7 oder 8, **dadurch gekennzeichnet, dass** der thermisch isolierende Körper (33) elastisch ausgebildet ist.

10. Induktionskochfeld (2) zur Verwendung in einem induktiven Kochsystem (1) gemäß einem der Ansprüche 1 bis 9, mit
mehreren induktiven Kochstellen (21) und jeweils einem als Spule ausgeführtem induktiven Heizelement (23), wobei wenigstens eine erste induktive Kochstelle (21), ausgebildet ist, dass ihre induktive Leistung in der Frequenz moduliert werden kann,
wobei das Induktionskochfeld (2) eine Antenne (25) aufweist, welche getrennt von den Spulen der Heizelemente (23) ausgebildet ist, um ein Signal eines Kraftmesswertes eines Kraftsensors (32) von einem Kochgeschirr (3) zu empfangen, welches auf einer der induktiven Kochstellen (21) angeordnet ist,
wobei das Induktionskochfeld (2) ferner ausgebildet ist, ein empfangenes Signal eines Kraftmesswertes eines Kochgeschirrs (3), welches aufgrund der Frequenz der Modulation der induktiven Leistung der induktiven Kochstelle (21) auf welcher das Kochgeschirr (3) angeordnet ist entsprechend der der Frequenz der Modulation verändert ist, dieser induktiven Kochstelle (21) zuzuordnen.

11. Verfahren zum Betrieb eines induktiven Kochsystems (1) gemäß einem der Ansprüche 1 bis 9, mit den Schritten:
Aussenden (100) einer induktiven Leistung von einer ersten induktiven Kochstelle (21) eines Induktionskochfeldes (2) zu einem ersten Kochgeschirr (3), welches auf der ersten induktiven Kochstelle (21) angeordnet ist,
wobei die induktive Leistung der ersten induktiven Kochstelle (21) in der Frequenz moduliert ist,
wodurch das Signal des Kraftmesswertes eine Veränderung erfährt, die der Frequenz der Modulation der induktiven Leistung der ersten induktiven Kochstelle (21) entspricht,
Empfangen (200) eines Signals eines Kraftmesswertes eines Kraftsensors (32) von dem ersten Kochgeschirr (3),
wobei das Signal des Kraftmesswertes die Veränderung aufweist, die der Frequenz der Modulation der induktiven Leistung der ersten induktiven Kochstelle (21) entspricht, und Zuordnen (300) des ersten Kochgeschirrs (3) zu der ersten induktiven Kochstelle (21) aufgrund der gleichen Frequenzen der Modulationen der elektrischen Leistung und des Signals des Kraftmesswertes.

12. Verfahren zum Betrieb eines induktiven Kochsystems (1) gemäß einem der Ansprüche 1 bis 9, mit den Schritten:
Aussenden (100) einer induktiven Leistung von einer ersten induktiven Kochstelle (21) eines Induktionskochfeldes (2) zu einem ersten Kochgeschirr (3), welches auf der ersten induktiven Kochstelle (21) angeordnet ist,
wobei die induktive Leistung der ersten induktiven Kochstelle (21) in der Frequenz moduliert ist,
Empfangen (200) eines Signals eines Kraftmesswertes eines Kraftsensors (32) von dem ersten Kochgeschirr (3),
wobei das Signal des Kraftmesswertes eine Resonanz und/oder eine Laufzeitverzögerung auf die Anregungsfrequenz der ersten induktiven Kochstelle (21) aufweist, und
Zuordnen (300) des ersten Kochgeschirrs (3) zu der ersten induktiven Kochstelle (21) aufgrund seiner Resonanz bzw. Laufzeitverzögerung auf die Anregungsfrequenz der ersten induktiven Kochstelle (21).

13. Verfahren nach Anspruch 11 oder 12, mit den weiteren Schritten
Überprüfen (400) des Empfangens des Signals eines Kraftmesswertes von dem ersten Kochgeschirr (3), und
in dem Fall, dass das Signal eines Kraftmesswertes von dem ersten Kochgeschirr (3) empfangen wird, Fortführen (500) des Betriebes der ersten induktiven Kochstelle (21), oder
in dem Fall, dass kein Signal eines Kraftmesswertes von dem ersten Kochgeschirr (3) empfangen wird, Auslösen (600) einer Reaktion der ersten induktiven Kochstelle (21), vorzugsweise Beenden (600) des Betriebes der ersten induktiven Kochstelle (21).

## Claims

1. Inductive cooking system (1),
comprising an induction hob (2) having a plurality of inductive hotplates (21) and in each case an inductive heating element (23) in the form of a coil,
the induction hob (2) having a first inductive hotplate (21) that has at least one first heating element (23), the first heating element (23) being assigned to the first inductive hotplate (21), and
the induction hob (2) having a second inductive hotplate (22) that has at least one second heating element (23), the second heating element (23) being assigned to the second inductive hotplate (21), and comprising at least one first item of cookware (3) which is arranged on the first inductive hotplate (21),
and comprising a force sensor (32) which is designed to detect a weight force and/or a change in the weight force of the first item of cookware (3) with respect to the surface of the first inductive hotplate (21) as a force measurement value and to transmit a signal of the force measurement value, and
the induction hob (2) being designed to receive the signal of the force measurement value from the force sensor (32) of the first item of cookware (3),
**characterised in that**
the force sensor (32) is formed in the item of cookware (3) and
the induction hob (2) has an antenna (25) for receiving the signal of the force measurement value, which antenna is formed separately from the coils of the heating elements (23), and
the induction hob (2) is designed to modulate the frequency of the inductive power of the first inductive hotplate (21) by means of the at least one first heating element (23) of the first inductive hotplate (21), in particular in a short period of time, and
the induction hob (2) is designed to modulate the frequency of the inductive power of the second inductive hotplate (22) by means of the at least one second heating element (23) of the second inductive hotplate (22), in particular in a short period of time,
it being possible for the two inductive hotplates (21, 22) to be modulated with different frequencies,
and the force sensor (32) is designed to transmit a signal of the force measurement value that is changed during the modulation of the frequency of the inductive power as a result of the modulation of the frequency of the inductive power.

2. Inductive cooking system (1) according to claim 1, **characterised by**
at least one second item of cookware (5) which is arranged on the second inductive hotplate (22),
the second item of cookware (5) having a force sensor (32) which is designed to detect a weight force and/or a change in the weight force of the second item of cookware (5) relative to the surface of the second inductive hotplate (22) as a force measurement value and to transmit a signal of the force measurement value, and
the induction hob (2) also being designed to receive the signal of the force measurement value from the force sensor (32) of the second item of cookware (3),
the induction hob (2) also being designed to assign the two items of cookware (3, 5) in each case to the corresponding inductive hotplate (21, 22) on the basis of the different frequencies of the modulations of the inductive powers of the two inductive hotplates (21, 22).

3. Inductive cooking system (1) according to claim 1, **characterised by**
a second inductive hotplate (21),
the induction hob (2) also being designed to modulate the frequency of the inductive power of the second inductive hotplate (22),
it being possible for the two inductive hotplates (21, 22) to be modulated with the same frequency.

4. Inductive cooking system (1) according to either claim 1 or claim 3, **characterised by**
at least one second item of cookware (5) which is arranged on the second inductive hotplate (22),
the second item of cookware (5) having a force sensor (32) which is designed to detect a weight force of the second item of cookware (5) with respect to the surface of the second inductive hotplate (22),
the induction hob (2) also being designed to receive a signal of a force measurement value from the second item of cookware (3),
the force sensors (32) of the two items of cookware (3, 5) being designed to respond to the excitation frequencies of the two inductive hotplates (21, 22) with different resonances and/or with different propagation delays,
the induction hob (2) also being designed to assign the two items of cookware (3, 5) in each case to the corresponding inductive hotplate (21, 22) on the basis of the different resonances or propagation delays of the two force sensors (32) of the two items of cookware (3, 5).

5. Inductive cooking system (1) according to any of the preceding claims, **characterised in that**
the item of cookware (3, 5) has at least one stand (31) by means of which a cookware body (30) of the item of cookware (3; 5) can rest on the surface of the inductive hotplate (21), and
the force sensor (32) is arranged within the stand (31) of the item of cookware (3; 5).

6. Inductive cooking system (1) according to any of the preceding claims, **characterised in that**
the force sensor (32) is an RFID sensor (32) or a SAW sensor (32).

7. Inductive cooking system (1) according to any of the preceding claims, **characterised in that**
the item of cookware (3, 5) has at least one thermally insulating body (33),
the force sensor (32) being spaced apart from the cookware body (30) and/or from the surface of the inductive hotplate (21; 22) by the thermally insulating body (33).

8. Inductive cooking system (1) according to claim 7, **characterised in that**
the force sensor (32) is embedded in the thermally insulating body (33).

9. Inductive cooking system (1) according to either claim 7 or claim 8, **characterised in that** the thermally insulating body (33) is resilient.

10. Induction hob (2) for use in an inductive cooking system (1) according to any of claims 1 to 9, comprising
a plurality of inductive hotplates (21) and in each case an inductive heating element (23) designed as a coil, at least one first inductive hotplate (21) being designed so that the frequency of its inductive power can be modulated,
wherein the induction hob (2) has an antenna (25), which is formed separately from the coils of the heating elements (23), for receiving a signal of a force measurement value of a force sensor (32) from an item of cookware (3) which is arranged on one of the inductive hotplates (21),
wherein the induction hob (2) is also designed to assign a received signal of a force measurement value of an item of cookware (3), which signal is changed, according to the frequency of the modulation, on the basis of the frequency of the modulation of the inductive power of the inductive hotplate (21) on which the item of cookware (3) is arranged, to this inductive hotplate (21).

11. Method for operating an inductive cooking system (1) according to any of claims 1 to 9, comprising the steps of:
transmitting (100) an inductive power from a first inductive hotplate (21) of an induction hob (2) to a first item of cookware (3) which is arranged on the first inductive hotplate (21),
wherein the frequency of the inductive power of the first inductive hotplate (21) is modulated,
whereby the signal of the force measurement value undergoes a change that corresponds to the frequency of the modulation of the inductive power of the first inductive hotplate (21),
receiving (200) a signal of a force measurement value of a force sensor (32) from the first item of cookware (3),
wherein the signal of the force measurement value has the change that corresponds to the frequency of the modulation of the inductive power of the first inductive hotplate (21), and
assigning (300) the first item of cookware (3) to the first inductive hotplate (21) on the basis of the same frequencies of the modulations of the electrical power and the signal of the force measurement value.

12. Method for operating an inductive cooking system (1) according to any of claims 1 to 9, comprising the steps of:
transmitting (100) an inductive power from a first inductive hotplate (21) of an induction hob (2) to a first item of cookware (3) which is arranged on the first inductive hotplate (21),
wherein the frequency of the inductive power of the first inductive hotplate (21) is modulated,
receiving (200) a signal of a force measurement value of a force sensor (32) from the first item of cookware (3),
wherein the signal of the force measurement value has a resonance and/or a propagation delay at the excitation frequency of the first inductive hotplate (21), and
assigning (300) the first item of cookware (3) to the first inductive hotplate (21) on the basis of its resonance or propagation delay at the excitation frequency of the first inductive hotplate (21).

13. Method according to either claim 11 or claim 12, comprising the additional steps of:
checking (400) the receipt of the signal of a force measurement value from the first item of cookware (3), and
in the event that the signal of a force measurement value is received from the first item of cookware (3), continuing (500) the operation of the first inductive hotplate (21), or
in the event that no signal of a force measurement value is received from the first item of cookware (3), triggering (600) a response of the first inductive hotplate (21), preferably ending (600) the operation of the first inductive hotplate (21).

## Revendications

1. Système de cuisson à induction (1),
comportant une table de cuisson à induction (2) comportant plusieurs plaques de cuisson à induction (21) et respectivement un élément chauffant à induction (23) conçu comme une bobine,
la table de cuisson à induction (2) présentant une première plaque de cuisson à induction (21) comportant au moins un premier élément chauffant (23), le premier élément chauffant (23) étant affecté à la première plaque de cuisson à induction (21), et
la table de cuisson à induction (2) présentant une seconde plaque de cuisson à induction (22) comportant au moins un second élément chauffant (23), le second élément chauffant (23) étant affecté à la seconde plaque de cuisson à induction (21), et comportant au moins une première batterie de cuisson (3) disposée sur la première plaque de cuisson à induction (21),
et comportant un capteur de force (32) configuré pour détecter une force de poids et/ou une modification de la force de poids de la première batterie de cuisson (3) par rapport à la surface de la première plaque de cuisson à induction (21) comme valeur de mesure de force et pour émettre un signal de la valeur de mesure de force, et
la table de cuisson à induction (2) étant configurée pour recevoir le signal de la valeur de mesure de force en provenance du capteur de force (32) de la première batterie de cuisson (3),
**caractérisé en ce que**
le capteur de force (32) est formé dans la batterie de cuisson (3) et
la table de cuisson à induction (2), pour recevoir le signal de la valeur de mesure de force, présente une antenne (25) qui est conçue séparément des bobines des éléments chauffants (23), et
la table de cuisson à induction (2) est configurée pour moduler en fréquence la puissance inductive de la première plaque de cuisson à induction (21) au moyen de l'au moins un premier élément chauffant (23) de la première plaque de cuisson à induction (21), en particulier dans une courte période de temps, et
la table de cuisson à induction (2) est configurée pour moduler en fréquence la puissance inductive de la seconde plaque de cuisson à induction (22) au moyen de l'au moins un second élément chauffant (23) de la seconde plaque de cuisson à induction (22), en particulier dans une courte période de temps,
les deux plaques de cuisson à induction (21, 22) pouvant être modulées avec des fréquences différentes,
et le capteur de force (32) étant configuré pour émettre un signal de la valeur de mesure de force modifiée pendant la modulation de la fréquence de la puissance inductive par la modulation de la fréquence de la puissance inductive.

2. Système de cuisson à induction (1) selon la revendication 1, **caractérisé par** au moins une seconde batterie de cuisson (5) disposée sur la seconde plaque de cuisson à induction (22),
la seconde batterie de cuisson (5) présentant un capteur de force (32) qui est configuré pour détecter une force de poids et/ou une modification de la force de poids de la seconde batterie de cuisson (5) par rapport à la surface de la seconde plaque de cuisson à induction (22) comme valeur de mesure de force et pour émettre un signal de la valeur de mesure de force, et
la table de cuisson à induction (2) étant en outre configurée pour recevoir le signal de la valeur de mesure de force provenant du capteur de force (32) de la seconde batterie de cuisson (3),
la table de cuisson à induction (2) étant en outre configurée pour affecter les deux batteries de cuisson (3, 5) à la plaque de cuisson à induction (21, 22) correspondante, respectivement, en raison des fréquences différentes des modulations des puissances inductives des deux plaques de cuisson à induction (21, 22).

3. Système de cuisson à induction (1) selon la revendication 1, **caractérisé par**
une seconde plaque de cuisson à induction (21),
la table de cuisson à induction (2) étant en outre configurée pour moduler en fréquence la puissance inductive de la seconde plaque de cuisson à induction (22),
les deux plaques de cuisson à induction (21, 22) pouvant être modulées avec la même fréquence.

4. Système de cuisson à induction (1) selon la revendication 1 ou 3, **caractérisé par**
au moins une seconde batterie de cuisson (5) disposée sur la seconde plaque de cuisson à induction (22),
la seconde batterie de cuisson (5) présentant un capteur de force (32) qui est configuré pour détecter une force de poids de la seconde batterie de cuisson (5) par rapport à la surface de la seconde plaque de cuisson à induction (22),
la table de cuisson à induction (2) étant en outre configurée pour recevoir un signal d'une valeur de mesure de force provenant de la seconde batterie de cuisson (3),
les capteurs de force (32) des deux batteries de cuisson (3, 5) étant configurés pour réagir aux fréquences d'excitation des deux plaques de cuisson à induction (21, 22) avec des résonances différentes et/ou avec des retards de temps de propagation différents,
la table de cuisson à induction (2) étant en outre configurée pour affecter les deux batteries de cuisson (3, 5) à la plaque de cuisson à induction (21, 22) correspondante, respectivement, en raison des différentes résonances ou des différents retards de temps de propagation des deux capteurs de force (32) des deux batteries de cuisson (3, 5).

5. Système de cuisson à induction (1) selon l'une des revendications précédentes, **caractérisé en ce que**
la batterie de cuisson (3, 5) présente au moins un support (31) avec lequel un corps de batterie de cuisson (30) de la batterie de cuisson (3; 5) peut reposer sur la surface de la plaque de cuisson à induction (21), et
le capteur de force (32) est disposé à l'intérieur du support (31) de la batterie de cuisson (3; 5).

6. Système de cuisson à induction (1) selon l'une des revendications précédentes, **caractérisé en ce que**
le capteur de force (32) est un capteur RFID (32) ou un capteur SAW (32).

7. Système de cuisson à induction (1) selon l'une des revendications précédentes, **caractérisé en ce que**
la batterie de cuisson (3, 5) présente au moins un corps thermiquement isolant (33),
le capteur de force (32) étant écarté du corps de batterie de cuisson (30) et/ou de la surface de la plaque de cuisson à induction (21 ; 22) par le corps thermiquement isolant (33).

8. Système de cuisson à induction (1) selon la revendication 7, **caractérisé en ce que** le capteur de force (32) est incorporé dans le corps thermiquement isolant (33).

9. Système de cuisson à induction (1) selon la revendication 7 ou 8, **caractérisé en ce que** le corps thermiquement isolant (33) est conçu élastique.

10. Table de cuisson à induction (2) destinée à être utilisée dans un système de cuisson à induction (1) selon l'une des revendications 1 à 9, comportant
plusieurs plaques de cuisson à induction (21) et respectivement un élément chauffant à induction (23) réalisé comme une bobine, au moins une première plaque de cuisson à induction (21) étant configurée pour pouvoir moduler en fréquence sa puissance inductive,
la table de cuisson à induction (2) présentant une antenne (25) qui est conçue séparément des bobines des éléments chauffants (23) afin de recevoir un signal d'une valeur de mesure de force d'un capteur de force (32) en provenance d'une batterie de cuisson (3), laquelle est disposée sur l'une des plaques de cuisson à induction (21), la table de cuisson à induction (2) étant en outre configurée pour affecter un signal reçu d'une valeur de mesure de force d'une batterie de cuisson (3), lequel signal, en raison de la fréquence de la modulation de la puissance inductive de la plaque de cuisson à induction (21) sur laquelle est disposée la batterie de cuisson (3), est modifié selon la fréquence de la modulation, à ladite plaque de cuisson à induction (21).

11. Procédé de fonctionnement d'un système de cuisson à induction (1) selon l'une des revendications 1 à 9, comportant les étapes :
d'envoi (100) d'une puissance inductive provenant d'une première plaque de cuisson à induction (21) d'une table de cuisson à induction (2) à une première batterie de cuisson (3) disposée sur la première plaque de cuisson à induction (21),
la puissance inductive de la première plaque de cuisson à induction (21) étant modulée en fréquence,
moyennant quoi le signal de la valeur de mesure de force subit une modification qui correspond à la fréquence de la modulation de la puissance inductive de la première plaque de cuisson à induction (21),
de réception (200) d'un signal d'une valeur de mesure de force d'un capteur de force (32) provenant de la première batterie de cuisson (3),
le signal de la valeur de mesure de force présentant la modification qui correspond à la fréquence de la modulation de la puissance inductive de la première plaque de cuisson à induction (21), et d'affectation (300) de la première batterie de cuisson (3) à la première plaque de cuisson à induction (21) en raison des mêmes fréquences des modulations de la puissance électrique et du signal de la valeur de mesure de force.

12. Procédé de fonctionnement d'un système de cuisson à induction (1) selon l'une des revendications 1 à 9, comportant les étapes :
d'envoi (100) d'une puissance inductive provenant d'une première plaque de cuisson à induction (21) d'une table de cuisson à induction (2) à une première batterie de cuisson (3) disposée sur la première plaque de cuisson à induction (21),
la puissance inductive de la première plaque de cuisson à induction (21) étant modulée en fréquence,
de réception (200) d'un signal d'une valeur de mesure de force d'un capteur de force (32) provenant de la première batterie de cuisson (3),
le signal de la valeur de mesure de force présentant une résonance et/ou un retard de temps de propagation à la fréquence d'excitation de la première plaque de cuisson à induction (21), et
d'affectation (300) de la première batterie de cuisson (3) à la première plaque de cuisson à induction (21) en raison de sa résonance ou de son retard de temps de propagation à la fréquence d'excitation de la première plaque de cuisson à induction (21).

13. Procédé selon la revendication 11 ou 12, comportant les étapes supplémentaires
de vérification (400) de la réception du signal d'une valeur de mesure de force provenant de la première batterie de cuisson (3), et
dans le cas où le signal d'une valeur de mesure de force provenant de la première batterie de cuisson (3) est reçu, de poursuite (500) du fonctionnement de la première plaque de cuisson à induction (21), ou
dans le cas où aucun signal d'une valeur de mesure de force provenant de la première batterie de cuisson (3) n'est reçu, de déclenchement (600) d'une réaction de la première plaque de cuisson à induction (21), de préférence d'arrêt (600) du fonctionnement de la première plaque de cuisson à induction (21).
